# EUROPÄISCHE PATENTSCHRIFT

(11) **EP 0 352 463 B1**
(45) Veröffentlichungstag und Bekanntmachung des Hinweises auf die Patenterteilung: **18.09.1996**
(21) Anmeldenummer: 89110913.4
(22) Anmeldetag: 16.06.1989
(51) Int. Cl.: B32B 27/20, D21H 27/30

(54) **Folie für die Transfermetallisierung**
Foil for transfer metallization
Feuille pour la métallisation par transfert

(30) Priorität: 25.06.1988 DE 3821582
(43) Veröffentlichungstag der Anmeldung: 31.01.1990
(73) Patentinhaber: HOECHST AKTIENGESELLSCHAFT, 65926 Frankfurt am Main (DE)
(72) Erfinder: Janocha, Siegfried, Dr., D-6200 Wiesbaden (DE); Schlögl, Gunter, Dr., D-6233 Kelkheim (DE); Bothe, Lothar, Dr., D-6500 Mainz-Gonsenheim (DE); Crass, Günther, D-6204 Taunusstein 4 (DE)

(56) Entgegenhaltungen:
- EP-A- 0 004 633
- EP-A- 0 175 259
- EP-A- 0 263 963
- EP-A- 0 282 917
- US-A- 4 704 323

## Beschreibung

Die Erfindung bezieht sich auf eine Folie von der im Oberbegriff des Anspruchs 1 genannten Art, wie sie beispielsweise aus der EP-A-0 175 259 und der EP-A-0 216 342 bekannt geworden ist. Bei diesen bekannten Folien befinden sich inerte Zusatzmittel allerdings nur in den Deckschichten und sind in sehr geringer Menge vorhanden. Sie haben die Aufgabe, die Gleitfähigkeit bzw. die Antiblockeigenschaften der Folie zu verbessern. Die EP-A-0 263 963 beschreibt bedruckbare Polyolefinmehrschichtfolien, die erfindungsgemäß inerte Teilchen in der Basisschicht enthalten und ein migrierendes Additiv in einer der beiden Deckschichten. Bei den Folien gemäß EP-A-0 004 633 handelt es sich um eine Polypropylenfolie mit beidseitigen Deckschichten, wobei die Basisschicht Calziumcarbonatteilchen enthält.

Die Verpackungsindustrie hat einen hohen Bedarf an metallisierten Papieren und Kartonagen. Die Metallschicht sorgt für gute Sperreigenschaften gegen das Durchtreten von Aroma, Fett, Feuchtigkeit und Luftsauerstoff sowie für ein sehr werbewirksames Aussehen. Damit sind Papiere mit Metallschicht hervorragend als Verpackungsmaterial für Tabakartikel, Speiseeis, Konfekt, Süßigkeit, Kaugummi oder für fetthaltige Lebensmittel wie Butter oder Käse geeignet. Weitere Anwendungsbereiche sind Kosmetikprodukte oder die Verpackung von Sterilartikeln im medizinischen Bereich. Ein weiteres Anwendungsgebiet ist der Etikettensektor. In diesen Fällen wird die Metallschicht gewöhnlich mit einem Aufdruck versehen.

Für die Herstellung der Papier-Metall-Verbundmaterialien hat sich in den letzten Jahren das Verfahren der Transfermetallisierung bewährt. Hierbei wird in einem Transferprozeß die Metallschicht von einer im Vakuum mit Metall bedampften Polypropylenfolie auf das Papier übertragen. Im einzelnen besteht dieser Prozeß aus den folgenden Teilschritten: Kontinuierliche Metallisierung der Folienbahn durch Aufdampfen der Metallschicht, Beschichtung der Metallschicht auf der Folie oder des Papiers mit einem Klebstoff, Kaschierung zum Verbund Folie-Metall-Klebstoff-Papier, Aushärtung des Klebstoffs, Delaminierung des Verbunds, d. h. Trennung an der Grenzschicht Metall-Folie und Abziehen der Folie. Die als Metallüberträger verwendete Folie wird anschließend aufgewickelt und steht damit für eine erneute Metallisierung zur Verfügung. Durch die Verwendung geeigneter Rezepturen besteht die Möglichkeit, die Folie mehr als 40mal zu metallisieren.

Die Aushärtung des Klebstoffs erfolgt üblicherweise während der Lagerung des kaschierten Verbundes innerhalb von einigen Tagen oder auch "in-line" durch Elektronenstrahlhärtung, wobei man den Verbund mit energiereichen Elektronen bestrahlt. Das Aushärten des Klebstoffs mit Elektronenstrahlen gewinnt bei dem Transfermetallisierungsverfahren immer mehr an Bedeutung (vgl. z.B. Export Polygraph International (1986), H. 2, S. 108.

Durch die Transfermetallisierung erhält man Papier mit einer sehr glatten, spiegelnden und hochglänzenden metallischen Oberfläche. Wegen dieser dekorativen Eigenschaft wird es häufig für hochwertiges Geschenkpapier, Glückwunschkarten und Verpackungen genutzt, bei denen die Metallschicht mit einem Aufdruck versehen wird.

Für andere Anwendungsgebiete besteht dagegen ein Bedarf, der Metallschicht des Papier-Metall-Verbunds eine mattglänzende oder strukturierte Oberfläche zu verleihen oder Oberflächenbereiche mit unterschiedlich starkem Glanz zu schaffen.

Es hat sich nun gezeigt, daß die bisher für die Transfermetallisierung eingesetzten Polypropylenfolien für dieses Verfahren weniger geeignet sind, wenn die Härtung des Klebstoffs durch die Einwirkung von Elektronenstrahlen erfolgt. In diesem Fall werden die mechanischen Eigenschaften der Folie durch die Elektronenstrahlen verschlechtert. Dadurch erniedrigt sich die Wiederverwertungsrate, d.h. die Möglichkeit, die Folie mehrfach für die Metallisierung zu verwenden, so stark, daß das Verfahren nicht mehr wirtschaftlich durchführbar ist.

Es stellt sich somit die Aufgabe, eine orientierte Polypropylenfolie für die Transfermetallisierung zur Verfügung zu stellen, die bei Verwendung als Übertragungsmedium für Metallschichten auf Papier eine hohe Wiederverwendungsrate gewährleistet, und zwar sowohl unter Einsatz von Klebstoffen, die bei der Lagerung aushärten, als auch bei Klebstoffen, die durch Einwirkung von Elektronenstrahlen aushärten. Weiterhin soll die Folie die Möglichkeit bieten, der auf das Papier übertragenen Metallschicht einen verringerten Glanz, ein mattes Aussehen oder strukturierte Oberfläche und eine verbesserte Bedruckbarkeit zu verleihen.

Die obengenannte Aufgabe wird überraschenderweise durch die Folie mit den in Anspruch 1 genannten Merkmalen gelöst. Die abhängigen Ansprüche geben zweckmäßige Weiterbildungen der Folie an. Gegenstand der Erfindung ist ferner das Transfermetallisierungsverfahren nach Anspruch 18, bei dem diese Folie eingesetzt wird, sowie der zur Herstellung der Basisschicht geeignete Rohstoff aus Polypropylen nach Anspruch 20. Die Folie zeigt den Vorteil, daß bei der Transfermetallisierung auch Klebstoffe, die durch Elektronenstrahlen ausgehärtet werden, eingesetzt werden können, ohne daß sich die mechanischen Eigenschaften der Folie wesentlich verschlechtern. Sie läßt sich über 40mal zur Transfermetallisierung verwenden. Die auf Papier übertragenen Metallschichten zeigen verringerten Glanz oder mattes Aussehen.

Die Folie ist biaxial, d. h. in Längs- und Querrichtung, durch Streckung orientiert. Sie umfaßt eine Basisschicht und äußere Deckschichten, die gemeinsam extrudiert sind. Alle drei Schichten sind aus Homopolymeren, Copolymeren oder Terpolymeren von alpha-Olefinen mit 2 bis 6 C-Atomen oder deren Mischungen aufgebaut, insbesondere aus Propylenhomopolymeren und/oder Propylenmischpolymeren, vorzugsweise aus Propylencopolymeren oder Propylenterpolymeren mit Ethylen und/oder alpha-Olefinen mit 4 bis 6 C-Atomen. Der Anteil des Propylenhomopolymeren beträgt vorzugsweise mindestens 80 Gew.-%, insbesondere mindestens 90 Gew.-%, bezogen auf die Polymermischung. Die Viskositäten der die Basis- und Deckschichten bildenden Polymeren werden als Schmelzindices (melt flow index) angegeben. Der Schmelzindex der Basisschicht ist größer als 5 g/10 min und liegt vorzugsweise im Bereich von 6 bis 20 g/10 min, und ist kleiner als der Wert für den Schmelzindex der Deckschichten. Die Werte für den Schmelzindex werden bei 230 °C und einer Belastung von 2,16 kp nach DIN 53 735 bestimmt.

Die Gesamtdicke der Folie beträgt üblicherweise 20 bis 80 Mikrometer, insbesondere 30 bis 60 Mikrometer, wobei die Deckschichten im Vergleich zur Basisschicht dünn sind und vorzugsweise eine Dicke von 0,3 bis 5 Mikrometer, insbesondere 0,5 bis 2,5 Mikrometer, zeigen. Die Deckschichten sind gleich oder verschieden dick.

Die Schichten der Folie enthalten gegebenenfalls zweckmäßige Additive wie Antioxidantien und/oder Antistatika in jeweils wirksamer Menge. Die Basisschicht und die Deckschichten enthalten mindestens 0,4 Gew.-% Stabilisator, insbesondere sterisch gehinderte Phenole.

Für ihre Eignung als Transfermetallisierungsfolie ist es wichtig, daß die Basisschicht Additive enthält, die allmählich aus der Basisschicht in die Deckschichten migrieren und damit auch auf die äußeren Oberflächen der Folie gelangen. Solche Stoffe sind beispielsweise Amine mit Hydroxyalkylgruppen (Alkyl: C₂ oder C₃) und langkettigen Alkylgruppen (Alkyl: C₁₄-C₂₀), insbesondere N,N-Bishydroxyethyl-(C₁₄-C₂₀)-alkylamin und/oder Fettsäureamide mit 10 bis 25 C-Atomen wie Stearinsäureamid. Die Menge dieser Additive ist vorzugsweise höher als bei den bekannten Polypropylenfolien für die Transfermetallisierung, die in der Basisschicht keine inerten Teilchen enthalten, und liegt vorzugsweise bei Werten von 0,2 bis 2,5 Gew.-%, bezogen auf die Basisschicht. Die Menge dieser Additive sollte bei erhöhtem Gehalt an inerten Teilchen vergrößert werden. Die Verwendung dieser Verbindungen wird in der EP-A-0 175 259 beschrieben.

Weiterhin ist es von besonderem Vorteil, wenn vor dem ersten Aufbringen einer Metallschicht auf der einen Oberfläche der Folienbahn eine einseitige elektrische Corona-entladung erfolgt. Die andere, nicht behandelte Folienoberfläche dient zur Transfermetallisierung. Diese Vorbehandlung der Folie ist in der EP-A-0 216 342 beschrieben.

Das inerte Zusatzmittel befindet sich - im Gegensatz zu den vorbeschriebenen Transfermetallisierungsfolien - in der Basisschicht und ist dort in Teilchenform fein verteilt. Die mittlere Teilchengröße beträgt zweckmäßigerweise 0,03 bis 4 Mikrometer, vorzugsweise 0,3 bis 1 Mikrometer. Der Gehalt an inertem Zusatzmittel beträgt 1 bis 25 Gew.-%, insbesondere 5 bis 15 Gew.-%, bezogen auf die Basisschicht. Das inerte Zusatzmittel besteht insbesondere aus pulverförmigen anorganischen Zusatzstoffen, z. B. Carbonaten der Alkali- und Erdalkalimetalle, wie Calciumcarbonat (Kreide), Sulfaten wie Bariumsulfat, und/oder Oxiden wie anorganischen Siliciumverbindungen, insbesondere Magnesiumsilikat (Talkum), Na-Alsilikat, Siliciumdioxid, Glas oder Titandioxid oder aus Mischungen dieser Verbindungen. Diese werden in Form von feinen Teilchen, z. B. als Pulver, in die die Basisschicht bildende Kunststoffschmelze beim Extrudieren der Folie eingearbeitet und darin dispergiert. Besonders vorteilhaft werden die inerten Teilchen und die anderen Additive mit Masterbatch-Technik in die Basisschicht eingearbeitet.

In einer anderen Ausführungsform bestehen die inerten Teilchen aus organischem Kunststoff, der mit den Polymeren der Basisschicht und der Deckschichten unverträglich ist und einen höheren Schmelzpunkt aufweist. Zu diesen Polymeren gehören Styrol- und Acryl-Polymere, insbesondere Polystyrol und Polymethylmethacrylat, fluorierte Kohlenwasserstoffpolymere, Polyamide und Polyester.

Die inerten Teilchen ragen teilweise aus der Basisschicht heraus und sind auf ihrer hervortretenden Oberfläche vollständig von der Deckschicht umgeben. In bevorzugter Ausführungsform ist die Dicke mindestens einer der Deckschichten kleiner als die durchschnittliche Größe der Teilchen. Diese relativ dünne Deckschicht erhält durch die aus der Basisschicht herausragenden Teilchen eine profilierte Oberflächenstruktur, die zu einer erhöhten Rauhigkeit dieser Folienoberfläche führt. Durch Variation der Konzentration der inerten Teilchen, der mittleren Teilchengröße sowie der Dicke der Deckschicht läßt sich die gewünschte Rauhigkeit dieser Folienoberfläche einstellen. Die gemittelte Rauhtiefe der Folienoberfläche (Oberflächenrauhigkeit R_{z}) ist 0,5 bis 5 Mikrometer, insbesondere 1 bis 4 Mikrometer, gemessen nach DIN 4768. Wird auf die Folienoberfläche mit der erhöhten Rauhigkeit eine Metallschicht aufgebracht, so zeigt die Metalloberfläche nach der Übertragung auf das Papier einen matten Glanz. Wenn die Folie auf der anderen, gegenüberliegenden Oberfläche eine dickere Deckschicht aufweist, so daß die Teilchen der Basisschicht in der Oberflächenstruktur der Deckschicht nicht mehr zur Wirkung kommen, so läßt sich diese Folie auch zur Herstellung hochglänzender Metallschichten verwenden, wenn man diese andere Oberfläche der Folie zur Transfermetallisierung benutzt.

In bevorzugter Ausführungsform besitzt die Basisschicht eine porige Struktur. Dadurch zeigt die Folie eine Dichte, die geringer ist als die rein rechnerische Dichte aufgrund der verwendeten Mischung von Polypropylen und inerten Teilchen. Insbesondere beträgt ihre Dichte 0,50 bis 0,85 g/cm³. Bei zu niedriger Dichte ist die Festigkeit der Folie für die Transfermetallisierung nicht ausreichend, bei zu hoher Dichte läßt sich die Folie nicht einwandfrei prägen. Die porige Struktur ergibt sich aufgrund von Mikrorissen, Leerstellen, Mikrohohlräumen oder Vakuolen ("voids"), welche beim Strecken der coextrudierten Folie entstanden sind. Das Strecken erfolgt dabei unter Temperaturbedingungen, bei denen die Polymermatrix der Basisschicht an der Oberfläche der inerten Teilchen aufreißt, was zu den freien, leeren, ungefüllten Räumen (Leerstellen, Mikrohohlräumen, Vakuolen) in der Folie führt. Durch die Erhöhung der Konzentration der Feststoffteilchen läßt sich die Zahl der Leerstellen vergrößern und damit die Dichte der Folie erniedrigen.

Es ist auch möglich, die Folie, insbesondere mit relativ niedriger Dichte, noch zusätzlich mit einem Prägemuster zu versehen, welches auf die transferierte Metallschicht übertragen wird. Werden Folienoberflächen mit entsprechenden Werkzeugen geprägt, verliert die Folienoberfläche im Bereich der Druckeinwirkung die Profilierung. Je nach Größe und Oberflächenstruktur des Prägewerkzeugs erhält die Folie partiell oder vollflächig eine glatte, rauhe und/oder profilierte Struktur, z.B. in Form von Rillen, Vertiefungen oder sonstigen Mustern wie ornamentalen Ausführungen. Infolgedessen zeigt auch die Metalloberfläche in diesem Bereich je nach Oberflächenausführung der Folie erhöhten oder verringerten Glanz und/oder entsprechende Strukturen.

Der bevorzugte Folienrohstoff für die Basisschicht umfaßt somit neben dem thermoplastischen Polymerisat migrierende Additive, insbesondere aus der Gruppe der langkettigen Alkylamine und Fettsäureamide, und inerte anorganische oder organische Teilchen. Weiterhin ist im Folienrohstoff für die Basisschicht, in gleicher Weise wie in den Deckschichten, wenigstens ein Stabilisator vorhanden. Diese Verbindungen werden in einer Menge von mehr als 0,4, vorzugsweise bis zu 1 Gew.-% in diesem Folienrohstoff für die Basisschicht eingesetzt und führen zu einer Verringerung der Oxidationserscheinungen der Folie. Geeignete Stabilisatoren werden von T.J. Henman in der Publikation "World Index of Polyolefine Stabilizers", Kogan Page Ltd., London 1982 angegeben und auch in der EP-A-0 222 296 beschrieben. Besonders geeignet sind sterisch gehinderte Phenole, wie z.B. 1,3,5-Trimethyl-2,4,6-tris (3,5-di-tert.-butyl-4-hydroxybenzyl)benzol. Diese Stoffe tragen überraschenderweise wesentlich dazu bei, daß die Folie bei der Transfermetallisierung vielfach wiederverwendet werden kann, insbesondere auch dann, wenn die Folie zur Härtung der Klebstoffschicht Elektronenstrahlen ausgesetzt wird.

Die Herstellung der erfindungsgemäßen Transfermetallisierungsfolie erfolgt nach dem bekannten Coextrusionsverfahren. Dabei werden die den Schichten der Folie entsprechenden Schmelzen durch eine Flachdüse coextrudiert, die coextrudierte Folie zur Verfestigung abgekühlt, die verfestigte Folie biaxial verstreckt, in Längsrichtung vorzugsweise um das 4- bis 7fache und in Querrichtung vorzugsweise um das 7-bis 10fache, und die biaxial gestreckte Folie thermofixiert. Zunächst werden also die der Basisschicht und den beiden Deckschichten entsprechenden Mischungen (Folienrohstoffe) durch Mischen der einzelnen Komponenten bereitet. Diese Mischungen werden in einem Extruder verflüssigt und komprimiert. Die erhaltenen Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50°C gehalten werden, abgekühlt und verfestigt. Die Längsstreckung wird vorzugsweise bei einer Folientemperatur von 120 bis 140°C durchgeführt, die Querstreckung vorzugsweise bei einer Folientemperatur von 160 bis 180°C. Die biaxiale Streckung wird vorzugsweise nacheinander, und zwar zuerst längs und dann quer vorgenommen.

Das Längsstrecken wird man zweckmäßigerweise mit Hilfe zweier entsprechend dem angestrebten Streckverhältnis verschieden schnell laufender Walzen durchführen und das Querstrecken mit Hilfe eines entsprechenden Kluppenrahmens. Zur Thermofixierung (Wärmebehandlung) wird die Folie etwa 0,5 bis 10 s lang bei einer Temperatur von 150 bis 160 °C gehalten.

Bei der Verwendung der Folie zur Metallisierung von flächenhaftem Trägermaterial wie Papier, Karton oder Glas wird das Verfahren in üblicher Weise durchgeführt. Die Folie wird im Hochvakuum mit Metall bedampft. Auf die Metallschicht des Folien-Metall-Materials oder auf die mit der Metallschicht zu versehende Oberfläche des flächenhaften Trägermaterials wird eine Klebstoffschicht aufgebracht und der Verbund aus Folie-Metall-Klebstoffschicht-Trägermaterial hergestellt. Nach dem Aushärten des Klebstoffs, das bei der Lagerung der Folie oder "in-line" durch Elektronenstrahlen erfolgt, wird die Folie abgezogen, aufgewickelt und erneut in diesen Prozeß eingesetzt. Bei dem erhaltenen Verbund aus Metall und flächenhaftem Trägermaterial zeigt die metallische Oberfläche einen matten Glanz, der Glanzwert ist kleiner als 90 %, insbesondere kleiner als 60 % (Meßwinkel 85°). Sie läßt sich ausgezeichnet bedrucken. Nach diesem Verfahren hergestelltes metallisiertes Papier eignet sich vorzugsweise für Etiketten, Geschenkpapier und Karten, insbesondere Glückwunschkarten, wobei die matte Metalloberfläche gegebenenfalls bedruckt ist.

Die Erfindung wird durch die folgenden Beispiele näher erläutert. Die angegebenen Glanzwerte wurden mit einem Reflektometer (Hersteller Dr. Lange, Neuss, DE) unter einem Meßwinkel von 85° gemessen.

### Beispiel 1

Mit Hilfe des Coextrusionsverfahrens wurde bei einer Extrusionstemperatur von etwa 250°C aus einer Breitschlitzdüse eine dreischichtige Polypropylenfolie mit einer Basisschicht und zwei Deckschichten extrudiert, wobei die Schmelze für die Basisschicht zu 89,5 Gew.-Teile aus einem Propylenhomopolymeren mit einem Schmelzindex von 16 g/10 min bestand und 9,6 Gew.-Teile Kreidepulver mit einem mittleren Teilchendurchmesser von 3 Mikrometer sowie 0,5 Gew.-Teile Stearinsäureamid und 0,5 Gew.-Teile N,N-Bishydroxyethyl-(C₁₈-alkyl)-amin, ferner als Stabilisator 0,5 Gew.-Teile 1,3,5-Trimethyl-2,4,6-tris (3,5-di-tert.-butyl-4-hydroxybenzyl)benzol enthielt. Eine der beiden Deckschichten (Deckschicht 1) bestand aus einem Propylenhomopolymeren mit einem Schmelzindex von 24 g/10 min, die andere Deckschicht (Deckschicht 2) bestand aus einem statistischen Ethylen-Propylen-Buten-1-Mischpolymerisat (C₂: 2,5 Gew.-%; C₄: 4,2 Gew.-%) mit einem Schmelzindex von 28 g/10 min. Die auf der Abzugswalze verfestigte Folie wurde in einem Heizkanal auf Strecktemperatur gebracht und zunächst bei 130 °C um den Faktor 5,5 längsgestreckt und anschließend bei 165 °C um den Faktor 9,5 quergestreckt. Die nachfolgende Thermofixierung erfolgte bei 160°C 5 s lang. Die Gesamtdicke der Mehrschichtfolie betrug 40 Mikrometer, die Deckschicht 1 war 2 Mikrometer, die Deckschicht 2 0,6 Mikrometer dick.

Die Deckschicht 2 der Mehrschichtfolie wurde 40mal im Transfermetallisierungsverfahren eingesetzt. Der Glanz der auf das Papier übertragenen Metallschicht betrug 55 %. Danach wurde die Deckschicht 1 beim Transfermetallisierungsverfahren eingesetzt. Der Glanz der auf das Papier übertragenen Metallschicht war höher und betrug 75 %. Die Deckschicht 1 zeigte aufgrund ihrer größeren Dicke eine weniger rauhe Oberfläche, wodurch der höhere Glanz der Metallschicht resultierte. Ein Muster dieser Mehrschichtfolie wurde auf ihrer Deckschicht 2 mit einem glatten Prägewerkzeug geprägt. Die geprägte Deckschicht 2 wurde zur Transfermetallisierung benutzt. Die Oberfläche der auf das Papier übertragenen Metallschicht zeigte im Bereich, in dem die Folie geprägt war, gegenüber dem ungeprägten Bereich einen erhöhten Glanz von 95 %. Die ungeprägte restliche Metalloberfläche zeigte den bereits oben ermittelten Wert von 55 %.

### Beispiel 2

Eine weitere Mehrschichtfolie wurde mit unveränderten Verfahrensparametern analog Beispiel 1 hergestellt. Die beiden Deckschichten waren identisch und entsprachen der Deckschicht 2 (Mischpolymerisat, Dicke 0,6 Mikrometer). Der Glanz der nach dem Transfermetallisierungsverfahren erhaltenen Metallschicht betrug 55 %.

## Patentansprüche

1. Biaxial streckorientierte Folie aus einer coextrudierten Basisschicht mit beidseitigen Deckschichten und inerten Zusatzmitteln, wobei die drei Schichten aus Polyolefin aufgebaut sind und die Basisschicht Additive enthält, die aus der Basisschicht in die Deckschichten migrieren, dadurch gekennzeichnet, daß die Basisschicht das inerte Zusatzmittel in Form von feinverteilten Teilchen in einer Menge von 1 bis 25 Gew.-%, bezogen auf die Basisschicht, enthält, daß diese Teilchen teilweise aus der Basisschicht herausragen und von den Deckschichten vollständig überzogen sind, wobei wenigstens eine der beiden äußeren Oberflächen der Deckschichten zumindest in Teilbereichen in Folge der aus der Basisschicht herausragenden Teilchen eine erhöhte Rauhigkeit mit einer gemittelten Rauhtiefe von 0,5 bis 5 µm aufweist (gemessen nach DIN4768), und wobei die Basisschicht und die Deckschichten einen oder mehrere Stabilisatoren in einer Menge von mindestens 0,4 Gew.-%, bezogen auf die jeweilige Schicht, enthalten.

2. Folie nach Anspruch 1, dadurch gekennzeichnet, daß ihre äußere Oberfläche im Bereich der erhöhten Rauhigkeit eine gemittelte Rauhtiefe von 1 bis 4 µm aufweist (gemessen nach DIN 4768).

3. Folie nach Anspruch 1 oder 2, dadurch gekennzeichnet, daß der Gehalt an inertem Zusatzmittel 5 bis 15 Gew.-% beträgt, bezogen auf die Basisschicht.

4. Folie nach einem der Ansprüche 1 bis 3, dadurch gekennzeichnet, daß die Teilchen des inerten Zusatzmittels eine mittlere Teilchengröße von 0,03 bis 4 µm besitzen.

5. Folie nach Anspruch 4, dadurch gekennzeichnet, daß die Teilchen des inerten Zusatzmittels eine mittlere Teilchengröße von 0,3 bis 1 µm besitzen.

6. Folie nach einem der Ansprüche 1 bis 5, dadurch gekennzeichnet, daß das inerte Zusatzmittel aus anorganischen Feststoffteilchen besteht.

7. Folie nach Anspruch 6, dadurch gekennzeichnet, daß das inerte Zusatzmittel aus Carbonaten, Sulfaten und/oder Oxiden besteht.

8. Folie nach Anspruch 6, dadurch gekennzeichnet, daß das inerte Zusatzmittel aus Kalziumcarbonat, Bariumsulfat, anorganischen Siliziumverbindungen und/oder Titandioxid besteht.

9. Folie nach einem der Ansprüche 1 bis 5, dadurch gekennzeichnet, daß das inerte Zusatzmittel aus festen organischen Kunststoffteilchen, die mit den Polymeren der Folie unverträglich sind und einen höheren Schmelzpunkt aufweisen, besteht.

10. Folie nach Anspruch 9, dadurch gekennzeichnet, daß das inerte Zusatzmittel aus Polymerteilchen mit Styrol- oder Acrylateinheiten, aus fluorierten Kohlenwasserstoffpolymeren, Polyamiden und/oder Polyestern besteht.

11. Folie nach einem der Ansprüche 1 bis 10, dadurch gekennzeichnet, daß die Basisschicht eine porige Struktur mit Leerstellen aufweist, wobei sich die Teilchen des inerten Zusatzmittels in den Leerstellen befinden, und daß die Dichte vorzugsweise 0,50 bis 0,85 g/cm³ beträgt.

12. Folie nach einem der Ansprüche 1 bis 11, dadurch gekennzeichnet, daß ihre Gesamtdicke 20 bis 80 µm beträgt, wobei die Deckschichten eine Dicke von 0,3 bis 5 µm aufweisen.

13. Folie nach Anspruch 12, dadurch gekennzeichnet, daß ihre Gesamtdicke 30 bis 60 µm beträgt, wobei die Deckschichten eine Dicke von 0,5 bis 2,5 µm aufweisen.

14. Folie nach einem der Ansprüche 1 bis 13, dadurch gekennzeichnet, daß die Dicke mindestens einer der beiden Deckschichten kleiner ist als die durchschnittliche Größe der Teilchen des inerten Zusatzmittels.

15. Folie nach einem der Ansprüche 1 bis 14, dadurch gekennzeichnet, daß die Basisschicht und die Deckschichten einen oder mehrere Stabilisatoren aus der Stoffklasse der sterisch gehinderten Phenole in einer Menge von 0,4 bis 1 Gew.-%, bezogen auf die jeweilige Schicht, enthält.

16. Folie nach Anspruch 15, dadurch gekennzeichnet, daß die Basisschicht und die Deckschichten als Stabilisator 1,3,5-Trimethyl-2,4,6-tris-(3,5-di-tert.-butyl-4-hydroxybenzyl)benzol in einer Menge von 0,4 bis 1 Gew.-%, bezogen auf die jeweilige Schicht, enthalten.

17. Folie nach einem der Ansprüche 1 bis 16, dadurch gekennzeichnet, daß sie durch partielle oder vollflächige Prägung oder sonstige Druckeinwirkung Prägemuster und/oder veränderten Glanz zeigt.

18. Verfahren zur Metallisierung von flächenhaftem Trägermaterial, bei dem eine Metallschicht von einer Folie auf das Trägermaterial übertragen wird, dadurch gekennzeichnet, daß zur Übertragung der Metallschicht die Folie nach einem der Ansprüche 1 bis 16 eingesetzt wird.

19. Verfahren nach Anspruch 18, dadurch gekennzeichnet, daß die Metallschicht bedruckt wird.

20. Rohstoff zur Herstellung der Basisschicht der Folie nach einem der Ansprüche 1 bis 17, enthaltend Polyolefin, inertes Zusatzmittel in Form von feinverteilten Teilchen, migrierfähige Verbindungen und wenigstens einen Stabilisator.

## Claims

1. A biaxially stretch-oriented film comprising a coextruded base layer with outer layers on both sides and inert additives, where the three layers are made of polyolefin and the base layer contains additives which migrate out of the base layer into the outer layers, wherein the base layer contains the inert additive in the form of finely divided particles in an amount of from 1 to 25 % by weight, based on the base layer, these particles partly protrude from the base layer and are completely covered by the outer layers, at least one of the two outer surfaces of the outer layers having, at least in certain areas, increased roughness with a mean roughness height of 0.5 to 5 µm (measured in accordance with DIN 4768) as a consequence of the particles protruding from the base layer, and the base layer and the outer layers contain one or more stabilizers in an amount of at least 0.4 % by weight, based on the particular layer.

2. A film as claimed in claim 1, wherein the outer surface thereof has, in the area of increased roughness, a mean roughness height of from 1 to 4 µm (measured in accordance with DIN 4768).

3. A film as claimed in claim 1 or 2, wherein the content of inert additive is from 5 to 15 % by weight, based on the base layer.

4. A film as claimed in any one of claims 1 to 3, wherein the particles of the inert additive have a mean particle size of from 0.03 to 4 µm.

5. A film as claimed in claim 4, wherein the particles of the inert additive have a mean particle size of from 0.3 to 1 µm.

6. A film as claimed in any one of claims 1 to 5, wherein the inert additive comprises particles of an inorganic solid.

7. A film as claimed in claim 6, wherein the inert additive comprises carbonates, sulfates and/or oxides.

8. A film as claimed in claim 6, wherein the inert additive comprises calcium carbonate, barium sulfate, inorganic silicon compounds and/or titanium dioxide.

9. A film as claimed in any one of claims 1 to 5, wherein the inert additive comprises solid organic plastic particles which are incompatible with the polymers of the film and have a relatively high melting point.

10. A film as claimed in claim 9, wherein the inert additive comprises polymer particles containing styrene or acrylate units, fluorinated hydrocarbon polymers, polyamides and/or polyesters.

11. A film as claimed in any one of claims 1 to 10, wherein the base layer has a porous structure with voids, the particles of the inert additive being located in the voids, and wherein the density is preferably from 0.50 to 0.85 g/cm³.

12. A film as claimed in any one of claims 1 to 11, whose total thickness is from 20 to 80 µm, the outer layers having a thickness of from 0.3 to 5 µm.

13. A film as claimed in claim 12, whose total thickness is from 30 to 60 µm, the outer layers having a thickness of from 0.5 to 2.5 µm.

14. A film as claimed in any one of claims 1 to 13, wherein the thickness of at least one of the two outer layers is less than the mean size of the particles of the inert additive.

15. A film as claimed in any one of claims 1 to 14, wherein the base layer and the outer layers contain one or more stabilizers from the sterically hindered phenol class in an amount of from 0.4 to 1 % by weight, based on the particular layer.

16. A film as claimed in claim 15, wherein the base layer and the outer layers contain 1,3,5-trimethyl-2,4,6-tris(3,5-di-tert-butyl-4-hydroxybenzyl)benzene as stabilizer in an amount of from 0.4 to 1 % by weight, based on the particular layer.

17. A film as claimed in any one of claims 1 to 16, which has an embossed pattern and/or modified gloss through partial or full-area embossing or other pressure action.

18. A process for metallizing sheet-like support material, in which a metal layer is transferred from a film to the support material, which comprises using a film as claimed in any one of claims 1 to 16 for transferring the metal layer.

19. The process as claimed in claim 18, wherein the metal layer is printed.

20. A raw material for the production of the base layer of a film as claimed in any one of claims 1 to 17, containing polyolefin, inert additive in the form of finely divided particles, compounds which are capable of migration, and at least one stabilizer.

## Revendications

1. Feuille à orientation biaxiale obtenue par étirage, constituée par une couche de base coextrudée et des couches de revêtement situées sur les deux faces et des additifs inertes, dans laquelle les trois couches sont formées d'une polyoléfine et la couche de base contient des additifs, qui migrent depuis la couche de base dans les couches de revêtement, caractérisée en ce que la couche de base contient l'additif inerte sous la forme de particules finement divisées en une quantité de 1 à 25 % en poids rapportés à la couche de base, que ces particules font saillie partiellement hors de la couche de base et sont entièrement recouvertes par les couches de revêtement, au moins l'une des deux surfaces extérieures des couches de revêtement possédant, au moins dans des zones partielles, en raison de la présence des particules qui font saillie hors de la couche de base, une rugosité accrue possédant une profondeur de rugosité moyenne de 0,5 à 5 µm (mesurée selon DIN4768), et la couche de base et les couches de revêtement contenant un ou plusieurs agents stabilisateurs en une quantité d'au moins 0,4 % en poids, rapporté à la couche respective.

2. Feuille selon la revendication 1, caractérisée en ce que la surface extérieure possède, dans l'intervalle de rugosité accrue, une profondeur moyenne de rugosité de 1 à 4 µm (mesurée selon DIN4768).

3. Feuille selon la revendication 1 ou 2, caractérisée en ce que la teneur en additif inerte est comprise entre 5 et 15 % en poids, rapportés à la couche de base.

4. Feuille selon l'une des revendications 1 à 3, caractérisée en ce que les particules de l'additif inerte possèdent une taille moyenne de particules de 0,03 à 4 µm.

5. Feuille selon la revendication 4, caractérisée en ce que les particules de l'additif inerte possèdent une taille moyenne de particules de 0,3 à 1 µm.

6. Feuille selon l'une des revendications 1 à 5, caractérisée en ce que l'additif inerte est constitué par des particules de substance solide minérale.

7. Feuille selon la revendication 6, caractérisé en ce que l'additif inerte est constitué par des carbonates, des sulfates et/ou des oxydes.

8. Feuille selon la revendication 6, caractérisé en ce que l'additif inerte est constitué par du carbonate de calcium, du sulfate de baryum, des liaisons minérales au silicium et/ou du bioxyde de titane.

9. Feuille selon l'une des revendications 1 à 5, caractérisée en ce que l'additif inerte est constitué par des particules solides de matière plastique organique, qui sont incompatibles avec les polymères de la feuille et possèdent un point de fusion élevé.

10. Feuille selon la revendication 9, caractérisée en ce que l'additif inerte est constitué par des particules de polymère contenant des motifs de styrène ou d'acrylate, par des polymères d'hydrocarbures fluorés, des polyamides et/ou des polyesters.

11. Feuille selon l'une des revendications 1 à 10, caractérisée en ce que la couche de base possède une structure poreuse comportant des vides, les particules de l'additif inerte étant situées dans les vides, et que la densité est comprise de préférence entre 0,50 et 0,85 g/cm³.

12. Feuille selon l'une des revendications 1 à 11, caractérisée en ce que son épaisseur totale est comprise entre 20 et 80 µm, les couches de revêtement possédant une épaisseur de 0,3 à 5 µm.

13. Feuille selon la revendication 12, caractérisée en ce que son épaisseur totale est comprise entre 30 et 60 µm, les couches de revêtement possédant une épaisseur de 0,5 à 2,5 µm.

14. Feuille selon l'une des revendications 1 à 13, caractérisée en ce que l'épaisseur d'au moins l'une des couches de revêtement est inférieure à la taille moyenne des particules de l'additif inerte.

15. Feuille selon l'une des revendications 1 à 14, caractérisée en ce que la couche de base et les couches de revêtement contient un ou plusieurs agents stabilisateurs de la classe de substances des phénols à encombrement stérique, en une quantité de 0,4 à 1 % en poids, rapporté à la couche respective.

16. Feuille selon la revendication 15, caractérisée en ce que la couche de base et les couches de revêtement contiennent comme agents stabilisateurs du 1,3,5-triméthyl-2,4,6-tris-(3,5-di-tert.-butyl-4-hydroxybenzyl) benzène en une quantité de 0,4 à 1 % en poids rapporté à la couche respective.

17. Feuille selon l'une des revendications 1 à 16, caractérisée en ce que, en raison d'un gaufrage partiel ou sur toute sa surface ou en raison d'une autre action de pression, elle présente une configuration gaufrée et/ou un brillant modifié.

18. Procédé pour métalliser un matériau de support en forme de nappe, selon lequel on transfère une couche métallique d'une feuille au matériau de support, caractérisé en ce que pour le transfert de la couche métallique, on utilise la feuille selon l'une des revendications 1 à 16.

19. Procédé selon la revendication 18, caractérisé en ce qu'on imprime la couche métallique.

20. Matière première pour fabriquer la couche de base de la feuille selon l'une des revendications 1 à 17, contenant une polyoléfine, un additif inerte sous la forme de particules finement divisées, des composés aptes à migrer et au moins un agent stabilisateur.
